Europäisches Patentamt

(19) European Patent Office

Office européen des brevets

(11) Veröffentlichungsnummer: **0 040 730**
**B1**

(12) **EUROPÄISCHE PATENTSCHRIFT**

(45) Veröffentlichungstag der Patentschrift:
31.10.84

(51) Int. Cl.³: **C 08 L 51/04, C 08 L 77/00**

(21) Anmeldenummer: **81103502.1**

(22) Anmeldetag: **08.05.81**

(54) **Elastomere thermoplastische Formmassen aus Polybutadienpfropfpolymerisaten und Polyamiden.**

(30) Priorität: **20.05.80 DE 3019233**

(43) Veröffentlichungstag der Anmeldung:
**02.12.81 Patentblatt 81/48**

(45) Bekanntmachung des Hinweises auf die Patenterteilung:
**31.10.84 Patentblatt 84/44**

(84) Benannte Vertragsstaaten:
**CH DE FR GB IT LI NL**

(56) Entgegenhaltungen:
**EP - A - 0 001 245**
**DE - B - 1 273 184**
**US - A - 4 173 556**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Grigo, Ulrich, Dr., Michelsheide 9, D-4152 Kempen 3 (DE)**
Erfinder: **Fahnler, Friedrich, Ing., Wimmersweg 60, D-4150 Krefeld (DE)**
Erfinder: **Lindner, Christian, Dr., Riehler Strasse 200, D-5000 Köln (DE)**
Erfinder: **Binsack, Rudolf, Dr., Bethelstrasse 4a, D-4150 Krefeld (DE)**

**Beschreibung**

Die Erfindung betrifft elastomere Formmassen aus Polyamiden und Acrylat-gepfropften Polybutadienen mit weitgehend temperaturunabhängiger Schlagzähigkeit und guter thermoplastischer Verarbeitbarkeit.

Elastomere thermoplastische Formmassen aus Polyamiden und Pfropfpolymerisaten, die ohne Abbau thermoplastisch verarbeitbar sind und eine ausgezeichnete Kerbschlagzähigkeit aufweisen, waren bereits bekannt. So werden in der EP-A-0 001 245 Formmassen aus 44—99,5 Gew.-% Polyamid und 0,5—60 Gew.-% bestimmter Pfropfprodukte beschrieben, die homogen sind und eine gute Kerbschlagzähigkeit aufweisen. Aus dem Hinweis, daß diese Kerbschlagzähigkeit auch bei tiefen Temperaturen gut ist, d. h., im Vergleich zum unmodifizierten Polyamid verbessert ist, konnte der Fachmann keineswegs entnehmen, daß die mit der Modifizierung erzielte Verbesserung der Kerbschlagzähigkeit nicht, wie üblich, bei tiefen Temperaturen abnimmt. Diese Abnahme war vielmehr bei Kenntnis der DE-AS 1 273 184 zu erwarten, aus der hervorgeht, daß beim Abmischen von Polyamiden mit den dort beschriebenen Pfropfpolymerisaten die Kerbschlagzähigkeit gegenüber modifiziertem Polyamid sehr wohl angehoben wird, die Werte aber eine deutliche Temperaturabhängigkeit aufweisen.

Dies gilt auch für die Mischung aus Polyamiden und Nitrilkautschuken, die in der US-PS 4 173 556 offenbart ist.

Es war daher ein Ziel der vorliegenden Erfindung, elastomere, thermoplastisch gut verarbeitbare Formmassen aus Polyamiden und Pfropfpolymerisaten zur Verfügung zu stellen, die neben ihrer guten Verarbeitbarkeit eine ausgezeichnete Kerbschlagzähigkeit aufweisen, die weitgehend auch bei tiefen Temperaturen erhalten bleibt.

Obwohl Pfropfpolymerisate auf Basis von vernetzten Polybutadien-Kautschuken bei Pfropfauflagen <50 Gew.-% im allgemeinen ohne Abbau nicht thermoplastisch verarbeitbar sind, wurde nun festgestellt, daß Zusätze relativ kleiner Mengen an Polyamiden zu mit Acrylaten gepfropften Polybutadienen, die aus weitgehend vernetzten Teilchen definierter Größen aufgebaut sind, zu einer guten thermoplastischen Verarbeitbarkeit der Pfropfpolymerisate führen. Die auf diese Weise hergestellten elastomeren thermoplastischen Formmassen weisen außer der guten thermoplastischen Verarbeitbarkeit außerdem eine ausgezeichnete Schlagzähigkeit auf, die bis —40°C praktisch temperaturunabhängig ist.

Gegenstand der Erfindung sind daher elastomere, thermoplastische Formmassen aus

A) 5—35, vorzugsweise 10—30 Gew.-% Polyamiden mit einer relativen Viskosität (gemessen an einer 1gew.-%igen Lösung in m-Kresol bei 25°C) von 2,5—5,0, vorzugsweise von 2,8—4,5 und

B) 95—65, vorzugsweise 90—70 Gew.-% eines Pfropfproduktes, hergestellt aus
   1. 70—95 Gew.-%, vorzugsweise 75—90 Gew.-%, besonders bevorzugt 80 Gew.-% eines vernetzten Polymerisats, das zu mindestens aus 95 Gew.-% Butadien und/oder substituiertem Butadien aufgebaut ist, als Pfropfgrundlage und
   2. 5—30 Gew.-%, vorzugsweise 10—25 Gew.-%, bevorzugt 20 Gew.-% eines Esters aus (Meth)acrylsäure und/oder Acrylsäure und einem Alkohol mit 1—8 C-Atomen, bevorzugt 1—4 C-Atomen, besonders bevorzugt Methanol als Pfropfmonomere, wobei der Gelanteil der Pfropfgrundlage >70%, vorzugsweise >80 Gew.-%, in Toluol gemessen,
   die Pfropfausbeute $G \geq 0{,}15$, vorzugsweise $\geq 0{,}40$ beträgt und das Verhältnis von gepfropften Monomeren zu der Gesamtmenge an Monomeren in der zu pfropfenden Mischung darstellt und
   der mittlere Teilchendurchmesser des Pfropfcopolymerisats 0,2—0,6, vorzugsweise 0,3—0,5, insbesondere ca. 0,4 μm beträgt und

C) gegebenenfalls üblichen Hilfs- und Zusatzstoffen, wobei die Summe aus A—C bzw. 1. und 2. jeweils 100 Gew.-% beträgt.

Für die Herstellung der erfindungsgemäßen Formmassen können folgende Polyamide eingesetzt werden: Polyamid-6, Polyamid-6,6, Gemische und Copolymere aus diesen beiden Komponenten und Copolymere des Caprolactam. Weiterhin kommen Polyamide in Betracht, deren Säurekomponente ganz oder teilweise aus Terephthalsäure und/oder Isophthalsäure und/oder Korksäure und/oder Sebacinsäure und/oder Azelainsäure und/oder Cyclohexandicarbonsäure, deren Diaminkomponente ganz oder teilweise aus m- und/oder p-Xylylendiamin und/oder 2,2,4-Trimethylhexamethylendiamin und/oder Isophorondiamin besteht.

Außerdem sind Polyamide geeignet, die ganz oder teilweise aus Lactamen mit 7—12 C-Atomen, gegebenenfalls unter Mitverwendung einer oder mehrerer der obengenannten Ausgangskomponenten hergestellt wurden.

Bevorzugte Polyamide sind Polyamid-6 und Copolyamide auf Basis Polyamid-6 mit einem Polyamid-6-Anteil >50 Gew.-% im Copolyamid.

Die rel. Viskosität der verwendeten Polyamide, gemessen als 1gew.-%ige Lösung in m-Kresol bei 25°C, liegt im Bereich von 2,5 bis 5,0, vorzugsweise von 2,8 bis 4,5.

Für die Herstellung der Pfropfprodukte werden als Pfropfgrundlage Dienkautschuke auf Basis Polybutadien und/oder Polyisopren, die bis zu 5 Gew.-% Styrol und/oder Ester der (Meth)Acrylsäure

2

wie Methyl- oder Ethyl(meth)acrylat als Comonomere enthalten können, verwendet. Der Gelanteil des als Pfropfgrundlage verwendeten Polymeren sollte > 70 Gew.-%, vorzugsweise ≥ 80 Gew.-% (gemessen in Toluol) sein.

Die bevorzugte Pfropfgrundlage besteht aus Polybutadien.

Pfropfmonomere sind die Ester der Methacrylsäure und/oder Acrylsäure und ein Alkohol mit 1—8 C-Atomen. Bevorzugt sind die Methylester. Besonders bevorzugt ist Methylmethacrylat.

Die erfindungsgemäßen Pfropfprodukte können nach allen bekannten Polymerisationsverfahren (Emulsions-, Lösungs-, Masse-, Suspensions-, Fällungspolymerisation) sowie aus Kombinationen dieser Verfahren hergestellt werden.

Zur Herstellung der Pfropfprodukte werden die aufzupfropfenden Monomeren in Gegenwart der vorgebildeten Pfropfgrundlage polymerisiert. Es bildet sich dabei neben dem eigentlichen Pfropfcopolymerisat auch freies Homopolymerisat. Unter Pfropfprodukte wird die Summe der eigentlichen Pfropfcopolymerisate und der freien Polymerisate verstanden. Die Menge der aufgepfropften Monomeren, ihr Molekulargewicht und die Zusammensetzung der gepfropften Monomeren kann in weiten Grenzen durch Variation der Polymerisationsbedingungen beeinflußt werden. Hierzu gehören vor allem: Art des Polymerisationsverfahren, Temperatur, Aktivatorsystem, Molekulargewichtsregler, Rührbedingungen und Art der Monomer-Dosierung. Erfindungsgemäß sollte die Pfropfausbeute $G \geq 0{,}15$, vorzugsweise $\geq 0{,}40$ betragen. Die Pfropfausbeute G bezeichnet das Mengenverhältnis von aufgepfropften Monomeren zur Gesamtmenge der aufzupfropfenden Monomeren und ist dimensionslos.

Bevorzugtes Polymerisationsverfahren für die Herstellung der erfindungsgemäßen Pfropfpolymeren ist die Emulsionspolymerisation.

Für die Herstellung der Pfropfprodukte durch Emulsionspolymerisation werden vernetzte, vorzugsweise durch Emulsionspolymerisation gewonnene Butadienpolymerisate als Pfropfgrundlagen bevorzugt. Erfindungsgemäß werden solche Pfropfprodukte, die einen »mittleren Teilchendurchmesser« $d_{50}$ von 0,2—0,6 µm, vorzugsweise 0,3—0,5 µm, insbesondere ca. 0,4 µm aufweisen, verwendet. (Zur Bestimmung vgl. W. Scholtan und H. Lange, Kolloid Z. und Z. Polymere 250 [1972], 782—796, bzw. G. Kämpf, H. Schuster, Angew. Makromolekulare Chemie 14 [1970], S. 111—129.)

Zur Herstellung der erfindungsgemäßen Formmassen ist es vorteilhaft, die vorgenannten Pfropfmonomeren in bestimmten Mengen einzusetzen. Erfindungsgemäß sollte die Pfropfauflage vorzugsweise aus 5—30 Gew.-%, vorzugsweise 10—25 Gew.-%, insbesondere 20 Gew.-% eines Esters der (Meth)acrylsäure mit einem Alkohol mit 1—8 C-Atomen, bevorzugt 1—4 C-Atomen, besonders bevorzugt Methanol, bestehen.

Statt nur einer Pfropfgrundlage können auch Abmischungen verschiedener Pfropfgrundlagen zur Herstellung der Pfropfprodukte eingesetzt werden. Weiterhin können statt nur eines Pfropfproduktes auch Abmischungen mehrerer erfindungsgemäßer Pfropfprodukte mit unterschiedlichem Aufbau zur Abmischung mit den Polyamiden herangezogen werden.

Die Herstellung der erfindungsgemäßen Formmassen ist nicht kritisch. Sie kann daher in den üblichen Mischaggregaten wie Walzen, Kneter, Ein- und Mehrwellenextruder erfolgen. Besonders geeignet sind Doppelwellenextruder.

Die Formmassen können auf den genannten Mischaggregaten hergestellt werden, indem die beiden Komponenten A und B gemeinsam aufgeschmolzen und homogenisiert werden oder indem das Pfropfprodukt B in die Schmelze des Polyamids A eingearbeitet wird.

Die Temperatur bei der Herstellung der Formmassen sollte mindestens 10° C oberhalb des Schmelzpunktes des Polyamids A und unterhalb 310° C, vorzugsweise zwischen 260 und 300° C liegen.

Beim Abmischen von Polyamid und Pfropfprodukt kann eine Pfropfung zwischen den beiden Mischkomponenten stattfinden. Der Pfropfungsgrad, der das Verhältnis von auf das Polyamid aufgepfropftem Pfropfprodukt B zum Gesamt-Pfropfprodukt B bezeichnet, läßt sich bestimmen durch präparative Fraktionierung mit entmischenden Lösungsmitteln (siehe R. Kuhn, Makromol, Chem. 177 [1976], 1525 ff.).

Die erfindungsgemäßen elastomeren Formmassen zeichnen sich durch eine bis —40° C weitgehend temperaturunabhängige Schlagzähigkeit, durch eine überraschend hohe Verträglichkeit der beiden Legierungskomponenten und durch eine überraschend gute thermoplastische Verarbeitbarkeit aus, die einerseits in einem relativ leichten Fließen der Schmelze und andererseits in einer hervorragenden Oberfläche der extrudierten und verspritzten Formkörper zum Ausdruck kommt.

Die erfindungsgemäßen Formmassen können übliche Additive, wie Gleit- und Entformungsmittel, Nukleierungsmittel, Stabilisator, Flammschutzmittel sowie Farbstoffe, enthalten. Die Zusatzstoffe werden vorzugsweise bei der Compoundierung in reiner Form oder als Konzentrate zugesetzt.

Die erfindungsgemäßen elastomeren Formmassen können überall dort verarbeitet werden, wo neben hoher Zähigkeit bei tiefen Temperaturen elastisches Verhalten gefordert wird, vor allem für Wintersportartikel und Schuhsohlen.

Weiterhin können aus den erfindungsgemäßen Massen relativ weiche, elastomere Formteile hergestellt werden, die sich besonders gut als Dichtungsmaterial und dergleichen eignen.

# 0 040 730

## Beispiele

### Herstellung des Pfropfproduktes

In einem druckfesten Rührgefäß wird eine Lösung aus 80 Gew.-Teilen salzfreiem Wasser, 1,5 Gew.-Teilen Natriumsalz der disproportionierten Abietinsäure und 0,3 Gew.-Teilen Kaliumperoxidsulfat vorgelegt. Nach Verdrängen der Luft durch Stickstoff und Einstellung der Innentemperatur auf 55°C werden 0,36 Gew.-Teile Dodecylmercaptan und x Gew.-Teile Butadien zugesetzt und polymerisiert. Mit absinkender Reaktionsgeschwindigkeit bei fortschreitender Polymerisation wird die Temperatur langsam auf 68°C angehoben.

Nach beendeter Polymerisation werden geringe Mengen des nicht umgesetzten Butadiens durch Ausrühren des erhaltenen Latex unter vermindertem Druck entfernt.

175 Gew.-Teile entsalztes Wasser und 0,3 Gew.-Teile Kaliumperoxidisulfat werden zugesetzt.

Nach Verdrängen der Luft durch Stickstoff und Erwärmen auf 65°C werden 2 Gew.-Teile Emulgator (Na-Salz der disproportionierten Abietinsäure oder Alkylsulfonate), gelöst in y Gew.-Teilen Methylmethacrylat, zugesetzt.

Die Zulaufdauer beträgt ca. 4 Stunden. Zur Vervollständigung der Reaktion wird nach beendetem Zulauf noch 2 Stunden bei 65°C weitergerührt.

Der so erhaltene Pfropfprodukt-Latex wird nach Zusatz von 1 Gew.-Teil eines phenolischen Antioxidans (2,6-Di-tert.-butyl-p-kresol) mit 2%iger $MgSO_4$/Essigsäure-Lösung (Mischungsverhältnis 1 : 1 Gew.-Teile) koaguliert, das Koagulat abgetrennt, salzfrei gewaschen und bei 70°C im Vakuum getrocknet.

Die Zusammensetzung der Pfropfprodukte ist der Tabelle 1 zu entnehmen.

Tabelle 1
Zusammensetzung der Pfropfprodukte

| Nr. | Pfropfgrundlage x Gew.-Teile Butadien | Pfropfauflage y Gew.-Teile Methyl(meth)acrylat | Mittlerer Teilchendurchmesser/ μm |
|-----|------|------|------|
| A | 90 | 10 | 0,4 |
| B | 80 | 20 | 0,4 |
| C | 70 | 30 | 0,4 |
| D | 80 | 20 Methylacrylat | 0,4 |

### Herstellung von elastomeren Formmassen aus Pfropfprodukt und Polyamid (Beispiele 1–6)

Die Einarbeitung der Pfropfprodukte A bis D in Polyamid erfolgte in einem handelsüblichen, kontinuierlich arbeitenden Doppelwellenextruder ZSK 32 der Fa. Werner & Pfleiderer, in der das Polyamid zunächst aufgeschmolzen wurde.

Durch einen zweiten Einfüllstutzen wurde das Pfropfprodukt in die Polyamid-Schmelze eindosiert. Stickstoffbeschleierung ist zweckmäßig. Das Pfropfprodukt wurde aufgeschmolzen und im Polyamid homogen verteilt. Es kann vorteilhaft sein, die Schmelze vor dem Austritt aus der Düse zu entgasen. Die Zylindertemperaturen wurden so eingestellt, daß eine Massetemperatur von 280–300°C gewährleistet war. Der Schmelzestrang der Mischung aus Polyamid und Pfropfprodukt wurde in Wasser abgekühlt, granuliert und getrocknet. Vom Granulat wurden auf einer üblichen Spritzgußmaschine bei 260°C Normkleinstäbe (nach DIN 53 453) verspritzt.

Geprüft wurde die Kerbschlagzähigkeit bei Raumtemperatur und bei −20°C bzw. −40°C (nach DIN 53 453) und die Biegefestigkeit. Die Zusammensetzung und die Eigenschaften der Formmassen sind der Tabelle 2 zu entnehmen.

4

Tabelle 2
Zusammensetzung und Eigenschaften der elastomeren Formmassen

| Beispiel | Pfropfprodukt | | Polyamid | | | Kerbschlagzähigkeit (kJ/m²) | | | Biege-festig-keit MPa |
|---|---|---|---|---|---|---|---|---|---|
| | Typ | Gew.-% | Typ | $\eta$ rel[1]) | Gew.-% | +20°C | −20°C | −40°C | |
| 1 | A | 80 | PA-6 | 2,91 | 20 | 22,2 | 20,9 | 20,4 | 12,1 |
| 2 | B | 80 | PA-6 | 2,91 | 20 | 26,2 | 23,4 | 23,9 | 13,3 |
| 3 | C | 80 | PA-6 | 2,91 | 20 | 24,2 | 21,5 | 22,7 | 14,5 |
| 4 | B | 70 | PA-6 | 2,91 | 30 | 31,6 | 22,7 | 18,3 | 18,0 |
| 5 | B | 90 | PA-6 | 2,91 | 10 | 20,8 | 23,0 | 24,8 | 9,0 |
| 6 | D | 80 | PS-6 | 2,91 | 20 | 22,4 | 23,1 | 22,5 | 23,0 |

[1]) rel. Viskosität, gemessen an einer 1%igen Lösung in m-Kresol bei 25°C in einem Ubbelohde-Viskosimeter.

## Patentansprüche

1. Elastomere thermoplastische Formmassen aus

A) 5—35 Gew.-% Polyamiden,
B) 95—65 Gew.-% eines Pfropfproduktes, hergestellt aus
    1) 70—95 Gew.-% eines vernetzten Polymerisats, das mindestens aus 95 Gew.-% Butadien und/oder substituiertem Butadien besteht, als Pfropfgrundlage und
    2) 5—30 Gew.-% eines Esters aus Methacrylsäure und/oder Acrylsäure und einem Alkohol mit 1—8 C-Atomen als Pfropfmonomere,
    wobei der Gelanteil der Pfropfgrundlage ≥70%, in Toluol gemessen,
    die Pfropfausbeute G≥0,15 und
    der mittlere Teilchendurchmesser des Pfropfcopolymerisats 0,2—0,6 μm beträgt und
C) gegebenenfalls üblichen Hilfs- und Zusatzstoffen, wobei die Summe aus A—C bzw. 1. und 2. jeweils 100 Gew.-% beträgt.

2. Formmassen nach Anspruch 1, dadurch gekennzeichnet, daß sie aus 10—30 Gew.-% der Komponente A) und 90—70 Gew.-% der Komponente B) bestehen.
3. Formmassen nach Ansprüchen 1 und 2, dadurch gekennzeichnet, daß die Komponente B) aus 75—90 Gew.-% der Pfropfgrundlage und 10—25 Gew.-% der Pfropfmonomeren hergestellt worden ist.
4. Formmassen nach Ansprüchen 1—3, dadurch gekennzeichnet, daß die Komponente B) aus 80 Gew.-% der Pfropfgrundlage und 20 Gew.-% der Pfropfmonomeren hergestellt worden ist.
5. Formmassen nach Ansprüchen 1—4, dadurch gekennzeichnet, daß als Pfropfmonomere Ester aus Methacrylsäure und/oder Acrylsäure und Alkoholen mit 1—4 C-Atomen eingesetzt werden.
6. Formmassen nach Ansprüchen 1—5, dadurch gekennzeichnet, daß als Pfropfmonomeres Methyl(meth)acrylat verwendet wird.
7. Formmassen nach Ansprüchen 1—6, dadurch gekennzeichnet, daß als Pfropfgrundlage Polybutadien verwendet wird.
8. Formmassen nach Ansprüchen 1—7, dadurch gekennzeichnet, daß als Polyamid Polyamid-6 oder Copolyamide mit >50 Gew.-% Polyamid-6-Anteil verwendet werden.

## Claims

1. Elastomeric thermoplastic moulding compositions composed of

A) 5—35% by weight of polyamides,
B) 95—65% by weight of a graft product produced from
    1) 70—95% by weight of a crosslinked polymer which consists of at least 95% by weight of butadiene and/or substituted butadiene, as the graft base, and

2) 5—30% by weight of an ester obtained from methacrylic acid and/or acrylic acid and an alcohol containing 1—8 C atoms, as the graft monomer,
the gel content of the graft base being $\geq 70\%$, measured in toluene,
the graft yield G being $\geq 0.15$ and
the average particle diameter of the graft copolymer being 0.2—0.6 $\mu$m, and

C) optionally, customary auxiliaries and additives, the sum of A—C, and the sum of 1 and 2 being in each case 100% by weight.

2. Moulding compositions according to Claim 1, characterised in that they consist of 10—30% by weight of component A) and 90—70% by weight of component B).

3. Moulding compositions according to Claims 1 and 2, characterised in that component B) has been produced from 75—90 % by weight of the graft base and 10—25 % by weight of the graft monomers.

4. Moulding compositions according to Claims 1—3, characterised in that component B) has been produced from 80 % by weight of the graft base and 20 % by weight of the graft monomers.

5. Moulding compositions according to Claims 1—4, characterised in that esters obtained from methacrylic acid and/or acrylic acid and alcohols containing 1—4 C atoms are used as the graft monomers.

6. Moulding compositions according to Claims 1—5, characterised in that methyl (meth)acrylate is used as the graft monomer.

7. Moulding compositions according to Claims 1—6, characterised in that polybutadiene is used as the graft base.

8. Moulding compositions according to Claims 1—7, characterised in that polyamide-6 or copolyamides containing >50 % by weight of polyamide-6 are used as the polyamide.

## Revendications

1. Matières à mouler thermoplastiques élastomériques formées de

A) 5—35% en poids de polyamides,
B) 95—65% en poids d'un produit de greffage obtenu à partir de
   1) 70—95% en poids d'un polymère réticulé qui est formé d'au moins 95% en poids de butadiène et/ou de butadiène substitué, comme substrat de greffage, et
   2) 5—30% en poids d'un ester d'acide méthacrylique et/ou d'acide acrylique et d'un alcool ayant 1 à 8 atomes de carbone, comme monomères à greffer,
   la teneur en gel du substrat de greffage étant supérieure ou égale à 70%, mesurée dans le toluène,
   le rendement de greffage G étant supérieur ou égal à 0,15 et
   le diamètre moyen des particules du copolymère greffé étant de 0,2 à 0,6 $\mu$m, et
C) le cas échéant, des substances auxiliaires et des additifs classiques, la somme de A—C et, respectivement de 1 et 2 s'élevant dans chaque cas à 100% en poids.

2. Matières à mouler suivant la revendication 1, caractérisées en ce qu'elles sont formées de 10 à 30% en poids du composant A) et de 90 à 70% en poids du composant B).

3. Matières à mouler suivant les revendications 1 et 2, caractérisées en ce que le composant B) a été préparé à partir de 75—90% en poids du substrat de greffage et de 10 à 25% en poids des monomères à greffer.

4. Matières à mouler suivant les revendications 1—3, caractérisées en ce que le composant B) a été obtenu à partir de 80% en poids du substrat de greffage et de 20% en poids des monomères à greffer.

5. Matières à mouler suivant les revendications 1—4, caractérisées en ce qu'on utilise comme monomères à greffer des esters d'acide méthacrylique et/ou d'acide acrylique et d'alcools ayant 1 à 4 atomes de carbone.

6. Matières à mouler suivant les revendications 1—5, caractérisées en ce qu'on utilise le (méth)acrylate de méthyle comme monomère à greffer.

7. Matières à mouler suivant les revendications 1—6, caractérisées en ce qu'on utilise le polybutadiène comme substrat de greffage.

8. Matières à mouler suivant les revendications 1—7, caractérisées en ce qu'on utilise comme polyamide le polyamide-6 ou des copolyamides ayant une proportion de plus de 50% en poids de polyamide-6.